# EUROPEAN PATENT SPECIFICATION

(11) **EP 4 383 465 B1**
(45) Date of publication and mention of the grant of the patent: **22.07.2026**
(21) Application number: 22855350.9
(22) Date of filing: 05.08.2022
(51) Int. Cl.: H01R 12/58, H01R 13/02, H01R 13/03, H01R 12/71, B60L 53/16, H01R 13/24

(54) **ELECTRICAL CONNECTION STRUCTURE, CHARGING SOCKET AND AUTOMOBILE**
ELEKTRISCHE VERBINDUNGSSTRUKTUR, LADEDOSE UND KRAFTFAHRZEUG
STRUCTURE DE CONNEXION ÉLECTRIQUE, DOUILLE DE CHARGE ET AUTOMOBILE

(30) Priority: 07.08.2021 CN 202110904556
(43) Date of publication of application: 12.06.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/110562
(87) International publication number: WO 2023/016369

(56) References cited:
- EP-A1- 3 667 831
- EP-A1- 3 859 897
- EP-A1- 3 859 897
- EP-A2- 0 123 376
- EP-A2- 0 840 400
- CN-A- 101 176 236
- CN-A- 113 725 644
- CN-U- 216 698 786
- DE-A1- 102017 125 505
- DE-A1- 19 735 409

## Description

### RELATED APPLICATION

The present disclosure claims the priority of the Chinese patent application with an application number of 202110904556.3, an invention title of 'electrical connection structure' and filed on August 7, 2021.

### TECHNICAL FIELD

The present disclosure relates to the field of charging of new energy automobiles, and particularly to an electrical connection structure which comprises a circuit board.

### BACKGROUND

Since the 1990s, under the dual pressure of energy and environment, the research and development of electric automobiles have entered an active period again. In the past 20 years, with the rapid development of various sciences and technologies, many technical difficulties of electric automobiles had been gradually solved. the major automobile manufacturers all over the world have launched their own products of electric automobiles.

Charging piles, charging guns and charging sockets are the main charging devices of electric automobiles. In which, the charging device standard requires that all the charging devices must be equipped with PE wires. the PE wire is a ground line of a charging device and is used to protect equipment and people when a current leakage occurs. In the existing charging gun or charging socket, terminals in the PE wire are usually directly welded on a circuit board. When being damaged during use, the terminals in the PE wire are uneasy to be removed during maintenance, which increases the maintenance manhours and the maintenance cost. When being not welded firmly, the terminals in the PE wire will be in poor contact with the circuit board, thereby affecting the stability of the electrical connection between the circuit board and the terminals in the PE wire, so that a current leakage may be caused in the equipment, and there is a risk of electric shock casualties.

Therefore, in the prior art, there is an urgent need for a new solution to solve the above problems.

Electrical connection structure, charging socket and automobile are known in the prior art, e.g EP3859897A1 and EP3667831A1.

### SUMMARY

The present disclosure provides an electrical connection structure, so as to ensure the stability of signal transmission between a circuit board and a terminal.

The specific technical solutions provided by the present disclosure are as follows:
An electrical connection structure as defined in claim 1.

Optionally, the electrical connection structure further includes a terminal bracket fixed on the circuit board.

Optionally, the plugging terminal further includes a fixing section fixed on the terminal bracket.

Optionally, an outer diameter of the contact section is smaller than a diameter of the plugging hole, and the contact section is located in the plugging hole.

Optionally, the plurality of metal elastic pieces are annularly arranged along the circumferential direction of the plugging hole.

Optionally, the plurality of metal elastic pieces are annularly arranged uniformly.

The metal elastic piece includes a fixing portion, an elastic portion and a contact portion which are disposed in sequence, in which the fixing portion is fixed on the circuit board.

Reinforcing ribs are disposed at a connecting transition between the elastic portion and the contact portion and/or a connecting transition between the fixing portion and the elastic portion.

Optionally, a ratio of a height of the reinforcing rib protruding from a surface of the connection transition to a thickness of the metal elastic piece ranges from 0.1 to 1.

Optionally, the metal elastic piece includes a fixing portion in the middle, and an elastic portion and a contact portion which are extended to two sides and are connected in sequence, in which the fixing portion is fixed on the circuit board.

Optionally, the fixing portion is fixed on an inner surface of the plugging hole and/or an upper surface of the circuit board and/or a lower surface of the circuit board.

Optionally, the contact portion is provided with an arc structure or a bent structure.

Optionally, a bending angle of the bent structure is 90° to 160°.

Optionally, the plurality of contact portions are arranged in a circle, and an inscribed circle diameter of plurality of the contact portions is smaller than the outer diameter of the contact section.

Optionally, the contact portion further includes a guide opening, an inscribed circle diameter which is larger than an outer diameter of the contact section.

Optionally, the contact portion is located in the plugging hole, and/or above the plugging hole, and/or below the plugging hole.

Optionally, the contact portion further includes a support portion fixed on the circuit board.

Optionally, when the plugging terminal is in contact connection with the plurality of contact portions, the elastic portion is elastically deformed, and the contact portions exert a pressure on the plugging terminal.

Optionally, the pressure is 0.5 N to 50 N.

Optionally, a material of the metal elastic piece is copper or copper alloy.

Optionally, the material of the metal elastic piece includes tellurium.

Optionally, a content of tellurium in the material of the metal elastic piece is 0.1% to 5%.

Optionally, the material of the metal elastic piece includes beryllium.

Optionally, a content of beryllium in the material of the metal elastic piece is 0.05% to 5%.

Optionally, a content of beryllium in the material of the metal elastic piece is 0.1% to 3.5%.

Optionally, the contact section and the contact portion are provided with plating layers.

Optionally, the material of the plating layer includes one or more of gold, silver, nickel, tin, zinc, tin-lead alloy, silver-antimony alloy, palladium, palladium-nickel alloy, graphite silver, graphene silver and silver-gold-zirconium alloy.

Optionally, the plating layer includes a bottom layer and a surface layer.

Optionally, a material of the bottom layer includes one or more of gold, silver, nickel, tin, tin-lead alloy and zinc; and a material of the surface layer includes one or more of gold, silver, nickel, tin, tin-lead alloy, silver-antimony alloy, palladium, palladium-nickel alloy, graphite silver, graphene silver and silver-gold-zirconium alloy.

Optionally, a thickness of the bottom layer is 0.01 µm to 15 µm.

Optionally, a thickness of the bottom layer is 0.1 µm-9 µm.

Optionally, a thickness of the surface layer is 0.3 µm to 55 µm.

Optionally, a thickness of the surface layer is 0.5 µm to 35 µm.

Optionally, the number of the metal elastic pieces is 3 to 24.

The present disclosure further provides a charging socket, including the electric connection structure of any one of the above embodiments.

The present disclosure further provides an automobile, including the charging socket and/or the electric connection structure of any one of the above embodiments.

The present disclosure can bring the following advantageous effects:
1. In the present disclosure, the plugging terminal is in good contact with the metal elastic pieces which are firmly connected to the circuit board, and the metal elastic pieces provide a plurality of signal detection points to ensure the stability of signal transmission. Meanwhile, the metal elastic piece itself has good performance, can be subjected to frequent plugging and unplugging with the plugging terminal, and achieves a long service life.
2. The metal elastic piece of the present disclosure is configured to include a fixing portion, an elastic portion and a contact portion which are disposed in sequence, and the fixing portions of the plurality of metal elastic pieces are fixed on a surface of the circuit board along a circumferential direction of the plugging hole, so as to ensure the stability between the metal elastic piece and the circuit board, and meanwhile, the elastic portion is elastically deformed through the contact between the contact portion and the contact section of the plugging terminal, and the contact portion exerts a pressure on the contact section, thereby ensuring the stability of the electrical connection between the plugging terminal and the metal elastic piece.
3. The contact portion of the metal elastic piece is provided with an arc structure or a bent structure, which further ensures the stability of the electrical connection between the plugging terminal (not limited to the PE terminal) and the metal elastic piece.
4. The plurality of contact portions are located in the plugging hole, or above the plugging hole, or below the plugging hole. A contact position of the plugging terminal with the metal elastic piece may be adjusted considering a mounting space of the circuit board.
5. The bending angle of the bent structure of the contact portion of the metal elastic piece is 90° to 160°. The setting of the bending angle enables the metal elastic piece to directly form the contact portion and the guide opening at ta bent position, so as to ensure the stability of the contact between the metal elastic piece and the plugging terminal, and the smooth guidance when the plugging terminal is plugged.
6. The metal elastic piece of the present disclosure adopts the tellurium copper alloy, so that the metal elastic piece has good electrical conductivity and machinability, thereby ensuring the electrical performance and improving the machinability. Meanwhile, the tellurium copper alloy has excellent elasticity.
7. In the present disclosure, the contact section and the contact portion are provided with plating layers, which can better improve the electrical conductivity, the wear resistance and the corrosion resistance of the contact point. A composite plating layer is exemplary, which can better improve the firmness of the plating layer, and still prevent the plating layer from falling off and ensuring its corrosion resistance after repeated plugging and unplugging.
8. In the present disclosure, the metal elastic piece may include a fixing portion in the middle, an elastic portion and a contact portion which are extended to two sides and are connected in sequence, in which the fixing portion is fixed on the circuit board, and further, the fixing portion may be fixed on an inner surface of the plugging hole, or an upper surface or a lower surface of the circuit board, thereby ensuring the stability of the electrical connection between the metal elastic piece and the circuit board.

### BRIEF DESCRIPTION OF THE DRAWINGS

FIG. 1 is a structural diagram of an electrical connection structure according to a background example of the present disclosure;
FIG. 2 is a structural diagram of the electrical connection structure illustrated in FIG. 1, which omits a plugging terminal and a terminal bracket and illustrates a cooperation between a plurality of metal elastic pieces and a circuit board;
FIG. 3 is a structural diagram of a metal elastic piece in the electrical connection structure;
FIG. 4 is a structural diagram of a circuit board in the electrical connection structure, in which a plugging hole is illustrated;
FIG. 5 is a structural diagram of a plugging terminal in the electrical connection structure;
FIG. 6 is a structural diagram of a terminal bracket in the electrical connection structure;
FIG. 7 is a structural diagram of an electrical connection structure according to an embodiment of the present disclosure;
FIG. 8 is a structural diagram of the electrical connection structure illustrated in FIG. 7, which omits a plugging terminal and a terminal bracket, and illustrates a cooperation between a plurality of metal elastic pieces and a circuit board;
FIG. 9 is a combined diagram of a metal elastic piece from different perspectives.

### DETAILED OF THE EMBODIMENTS

The technical solutions in the embodiments of the present disclosure will be clearly and completely described with reference to the drawings for the embodiments of the present disclosure. Obviously, those described are only a part, rather than all, of the embodiments of the present disclosure.

The present disclosure will be described in further detail below, so that persons skilled in the art can implement the present disclosure with reference to the text of the specification. In order to have a clearer understanding of the technical features, objectives and effects of the present disclosure, specific embodiments of the present disclosure will now be described with reference to the drawings. In which, the terms such as "first", "second", etc. are only used for descriptive purposes, and cannot be understood as indicating or implying relative importance or implicitly specifying the number of the indicated technical features. Therefore, features defined with "first", "second", etc. can explicitly or implicitly include one or more of these features. In the description of the present disclosure, unless otherwise specified, "a plurality of" means two or more. In the description of the present disclosure, unless otherwise specified, the term "connection" should be broadly understood, and for example, it may be a fixed connection, a detachable connection, a direct connection, or an indirect connection through an intermediary. For persons of ordinary skill in the art, the specific meanings of the above terms in this patent can be understood depending on specific circumstances.

### Background example

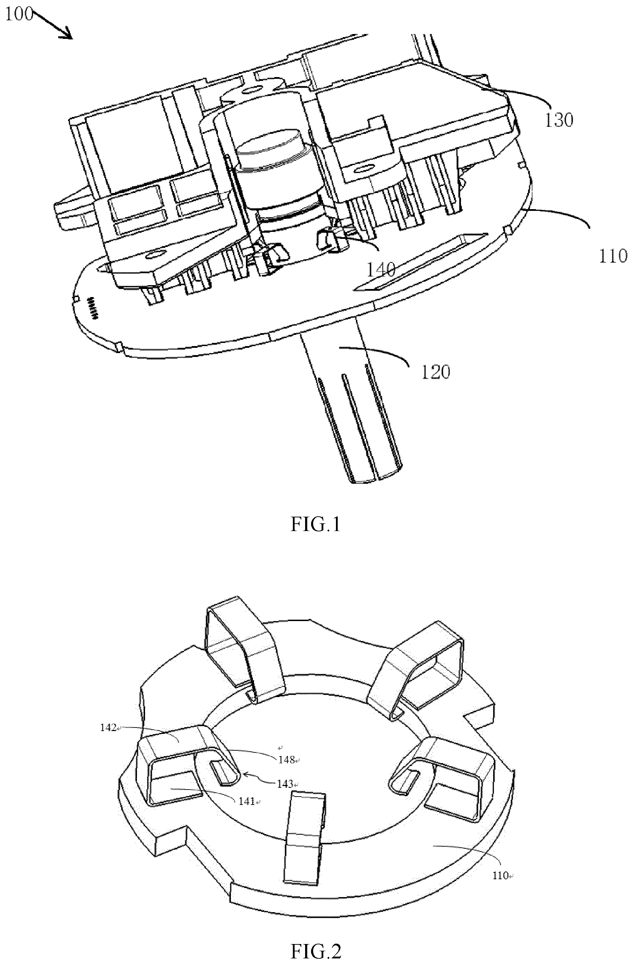

The present disclosure provides an electrical connection structure 100, which is applied to a circuit board provided with a plugging hole, as illustrated in FIG. 1, including a circuit board 110, a plugging terminal 120 and a plurality of metal elastic pieces 140. Specifically, the plurality of metal elastic pieces 140 are fixed to the circuit board 110 along a circumferential direction of the plugging hole 111, and in a state that the plugging terminal 120 is plugged into the plugging hole 111, the plugging terminal 120 is in contact with the plurality of metal elastic pieces 140 so as to form an electrical connection between the plugging terminal 120 and the circuit board 110.

In the present disclosure, the plugging terminal 120 is in good contact with the metal elastic pieces 140 which are firmly connected to the circuit board 110, and the metal elastic pieces 140 provide a plurality of signal detection points to ensure the stability of signal transmission. Meanwhile, the metal elastic piece 140 has excellent elasticity to be subjected to frequent plugging and unplugging with the plugging terminal 120, and hence has a long service life, which solves the problem in the prior art that a poor contact may be caused by unstable welding pins and affects the stability of electrical connection between the circuit board 110 and the plugging terminal 120. Moreover, as compared with the welded connection, the plugged connection between the plugging terminal 120 and the metal elastic piece 140 allows repeated plugging and unplugging, which enhances the adaptability of the circuit board 110.

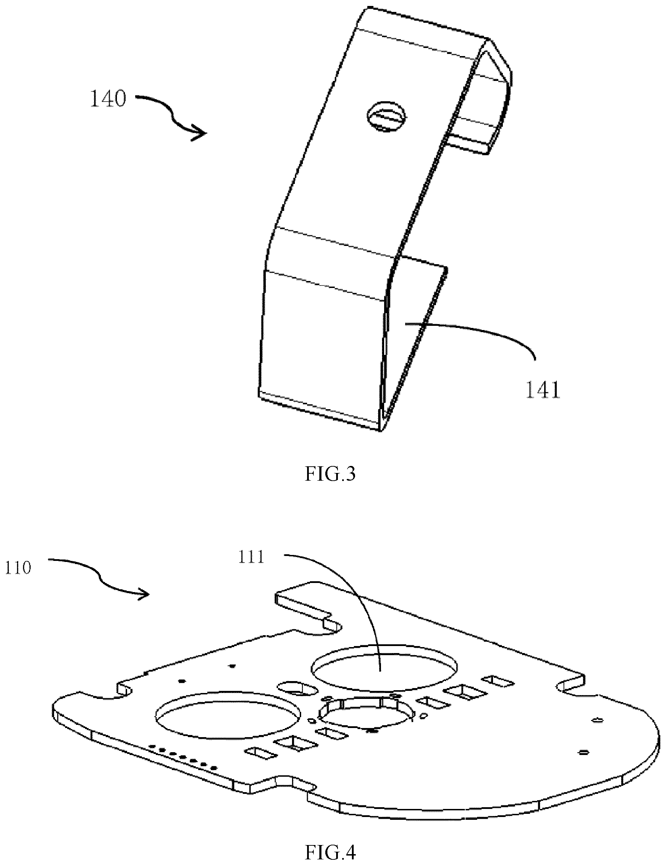

Next, the detailed structure of each component of the electrical connection structure will be described in detail with reference to FIGS. 1 to 6

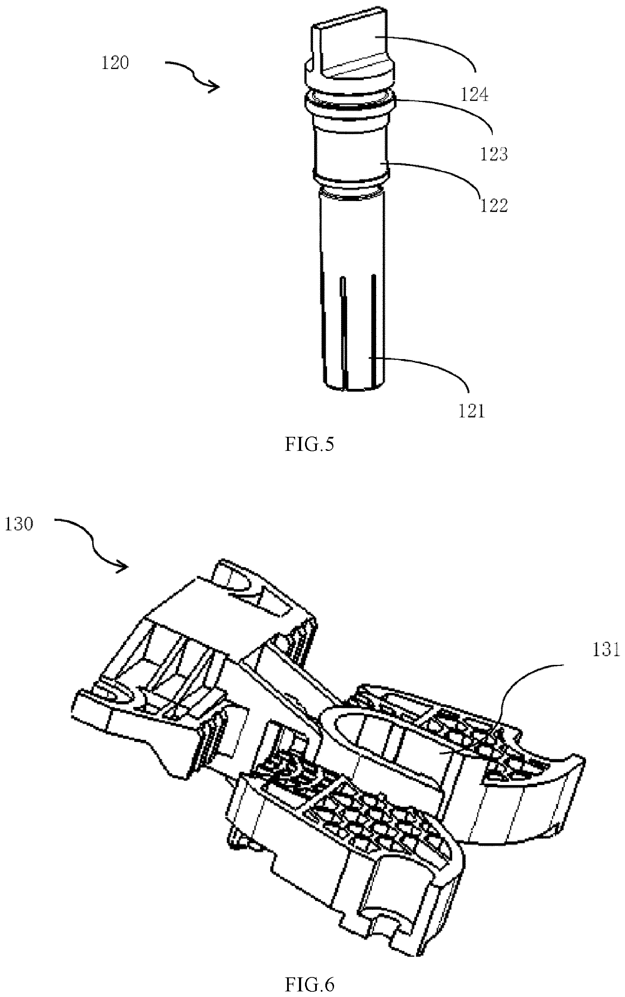

Specifically, as illustrated in FIG. 5, the plugging terminal 120 includes a plugging section 121, a contact section 122, a fixed section 123 and a connecting section 124 which are connected in sequence. In which, the plugging section 121 is used for plugging with corresponding terminals, and for example, a male terminal of a charging gun and a female terminal of a charging socket may be plugged, so that charging current can be conducted from a power source to an automobile battery. The connecting section 124 is used for an electrical connection with a cable conductor, and for example, the plugging terminal 120 inside the charging socket may be connected to the cable of the charging socket, and electric energy is conducted to the automobile battery. The contact section 122 is used for contact with the metal elastic piece 140, and for example, the PE terminal of the charging socket is in contact with the metal elastic piece 140 on the circuit board, so that the circuit board can read a grounding signal from the PE terminal.

Specifically, as illustrated in FIG. 6, the electrical connection structure of this embodiment further includes a terminal bracket 130 which may be fixed on the circuit board 110. The fixing section 123 of the plugging terminal 120 is fixed on the terminal bracket 130. The terminal bracket 130 may be fixed on the circuit board 110 by means of clamping, bonding and screw connection. The clamping means that a plurality of elastic claws are disposed on the terminal bracket 130, and clamping grooves or buckles are disposed on the circuit board 110, so that the plurality of claws of the terminal bracket 130 are clamped with the clamping grooves or buckles on the circuit board 110, thereby fixing the terminal bracket 130 on the circuit board 110. The bonding means that both the terminal bracket 130 and the circuit board 110 are provided with bonding surfaces, which are coated with an adhesive respectively so as to be bonded together. The screw connection means that the terminal bracket 130 is provided with threaded holes, and the circuit board 110 is provided with through holes, so that the circuit board 110 is screwed and fixed on the terminal bracket 130 by screws passing through the through hole.

More specifically, as illustrated in FIG. 6, the terminal bracket may include U-shaped gripping portions 131, and correspondingly, the fixing section 123 of the terminal is gripped between the U-shaped gripping parts for fixation.

Specifically, as illustrated in FIGS. 1, 2 and 4, the circuit board 110 is provided with a plugging hole 111 for plugging with the plugging terminal 120, and an outer diameter of the contact section 122 of the plugging terminal 120 is smaller than a diameter of the plugging hole on the circuit board 110, so that the plugging terminal 120 can be plugged into the plugging hole 111 smoothly. In addition, there is a gap between the plugging hole 111 and the contact section 122, which provides the plugging terminal 120 with a movement space, so that during plugging with the mating plugin terminal, the plugging terminal is allowed to slightly deviated from the axis, thereby avoiding a situation that the plugging terminal 120 cannot be plugged into the mating plugin terminal due to an excessive plugging deviation.

Specifically, the plurality of metal elastic pieces 140 are annularly arranged along the circumferential direction of the plugging hole 111. As illustrated in FIG. 2, the annularly arranged metal elastic pieces 140 can contact the contact section 122 of the plugging terminal 120 in a larger area, thereby reducing the contact resistance between the metal elastic pieces 140 and the plugging terminal 120 and improving the electrical performance of the electrical connection structure 100.

Specifically, the plurality of metal elastic pieces 140 are annularly arranged along the circumferential direction of the plugging hole 111 uniformly. As illustrated in FIG. 2, five metal elastic pieces 140 are arranged at equal intervals. If the plurality of metal elastic pieces 140 are not annularly arranged along the circumferential direction of the plugging hole 111 uniformly, or even biased to one side, the elastic forces exerted on the contact section 122 by the metal elastic pieces 140 will be non-uniform, and the plugging terminal 120 will be deviated from the axis in the plugging hole 111, resulting in that the mating plugin terminal cannot be plugged with the plugging terminal 111, and it is impossible to achieve the electrical connection.

Specifically, as illustrated in FIG. 2, each of the metal elastic pieces 140 includes a fixing portion 141, an elastic portion 142 and a contact portion 143 which are disposed in sequence, in which the fixing portions 141 of the plurality of metal elastic pieces 140 are fixed on an upper surface of the circuit board 110 along the circumferential direction of the plugging hole 111, thereby not only fixing the position of the metal elastic piece 140 on the circuit board 110, but also fixing one end of the corresponding elastic portion 142. When being contacted with the contact section 122, the contact portion 143 is displaced so that the elastic portion 142 is deformed, and the elastic portion 142 feeds back a deformation stress to the contact portion 143, so that the contact portion 143 exerts a pressure on the contact section 122, thereby making the contact more sufficient, reducing the contact resistance and improving the electrical performance of the electrical connection structure 100.

In other examples, the metal elastic piece 140 includes a fixing portion 141 in the middle, and an elastic portion 142 and a contact portion 143 which are extended to two sides and are connected in sequence, in which the fixing portion 141 is fixed on the circuit board and has the effect of fixing the whole metal elastic piece 140. Exemplarily, the fixing portion 141 is welded on an inner wall of the plugging hole 111, and the elastic portion 142 and the contact portion 143 on the two sides of the fixing portion 141 are extended to the upper and lower surfaces of the circuit board 110, respectively, thereby increasing the contact area between the contact portion 143 and the contact section 122, which can greatly reduce the contact resistance and improve the electrical performance of the electrical connection structure 100.

Specifically, the fixing portion 141 is fixed on an inner surface of the plugging hole 111 and/or the upper surface of the circuit board 110 and/or the lower surface of the circuit board 110, and the fixing portion 141 may be arranged at an appropriate position of the circuit board 110 according to the specific design of the circuit board 110, so that the circuit performance of the circuit board 110 itself is not affected, and the function of conducting current and signals of the metal elastic piece 140 can be realized.

Specifically, the contact portion 143 is provided as an arc structure or a bent structure, so that the contact between the contact portion 143 and the contact section 122 can be smoother without being stuck. In addition, during the use of the electrical connection structure 100, the contact portion 143 and the contact section 122 will be displaced relative to each other due to the vibration. In a stationary state, the contact portion 143 and the contact section 122 are in a surface contact. In a vibration environment, a short-term point contact will occur due to the relative displacement, and at this time, the contact resistance increases instantly due to the relative displacement, and the conduction current also increases suddenly, which leads to an excessive temperature rise of both the contact portion 143 and the contact section 122 and causes a damage. In the vibration environment, the arc structure or the bent structure also keeps the surface contact between the contact portion 143 and the contact section 122, so that the electric connection structure 100 will not be damaged due to a sudden increase of the conduction current.

Specifically, a bending angle of the bent structure of the contact portion 143 is 90° to 160°. In order to verify the influence of the bending angle of the bent structure on the contact resistance between the contact portion 143 and the contact section 122, the inventor selects the metal elastic piece 140, the plugging terminal 120 and the circuit board 110 with the same size and mount them in the same relative positions, but adopts different bending angles of the bent structure to measure the contact resistance between the contact portion 143 and the contact section 122 respectively. The test results are shown in Table 1.

The test method of the contact resistance between the contact portion 143 and the contact section 122 is to use a micro-ohmmeter, in which one end of a measuring portion of the micro-ohmmeter is placed on the contact portion 143 and the other end thereof is placed on the contact section 122, with the same position for each measurement, and then read the value of the contact resistance on the micro-ohmmeter. In this embodiment, the contact resistance greater than 1 mΩ is unqualified.

**Table 1: Influence of different bending angles of the bent structure on the contact resistance between the contact portion 143 and the contact section 122**

| Different bending angles of the bent structure (°) | | | | | | | | | | | |
|---|---|---|---|---|---|---|---|---|---|---|---|
| 70 | 80 | 90 | 100 | 110 | 120 | 130 | 140 | 150 | 160 | 170 | 180 |

| Contact resistance between the contact portion 143 and the contact section 122 (mΩ) | | | | | | | | | | | |
|---|---|---|---|---|---|---|---|---|---|---|---|
| 1.16 | 1.05 | 0.96 | 0.94 | 0.91 | 0.87 | 0.85 | 0.83 | 0.80 | 0.77 | Unplu ggable | Unplu ggable |

As can be seen from Table 1, when the bending angle of the bent structure is less than 90°, the contact position of the bent structure is sharp because of the small angle, and the contact area with the contact section 122 is small so the contact resistance also increases, which does not meet the standard requirements. However, when the bending angle of the bent structure is greater than 160°, the bent structure is nearly a plane and has no guiding function, and both ends of the contact portion 143 will be interfered with when the contact section 122 is to be inserted into the contact portion 143, resulting in a failure of the insertion of the contact section 122 into the contact portion 143, and it is impossible to realize the function of the electrical connection structure 100. Therefore, the inventor sets the bending angle of the bent structure of the contact portion 143 to be 90° to 160°.

Specifically, as illustrated in FIG. 1, in a state that the plugging terminal 120 is plugged into the plugging hole 111, the contact section 122 of the plugging terminal 120 is located in the plugging hole 111. Further, an inscribed circle diameter of the contact portion 143 of each of the plurality of metal elastic pieces 140 may be set to be smaller than an outer diameter of the contact section 122 of the plugging terminal 120, so that when the contact portion 143 is in contact with the contact section 122, the contact section 122 displaces the contact portion 143 to deform the elastic portion 142, and the elastic portion 142 feeds back a deformation stress to the contact portion 143 which then exerts a pressure on the contact section 122, which realizes a tight fit between the plugging terminal 120 and the metal elastic piece 140, thereby achieving a more sufficient contact, reducing the contact resistance, and improving the electrical performance of the electrical connection structure 100.

Specifically, as illustrated in FIG. 2, the contact portion 143 may further include a guide opening 148, an inscribed circle diameter of which is larger than the outer diameter of the contact section 122 of the plugging terminal 120. When the contact section 122 is inserted into the contact portion 143, because the inscribed circle diameter of the guide opening 148 is larger than the outer diameter of the contact section 122 of the plugging terminal 120, the guide opening 148 firstly contacts an inclined surface of the contact section 122, so that the contact portion 143 is moved backward. By disposing the guide opening 148, the plugging force for the plugging terminal 120 into the plugging hole 111 can be reduced, which makes the assembly of the electrical connection structure 100 easier, saves the working hours and improves the production efficiency.

Specifically, the contact portion 143 is located in the plugging hole 111, and/or above the plugging hole 111, and/or below the plugging hole 111. During the design of the electrical connection structure 100, in order to reduce the overall structure, it is necessary to optimize the design of the internal space. In different mounting environments, it is possible to design different shapes of the elastic portion 142 and different welding positions of the fixing portion 141, so that the contact portion 143 is located in different positions of the plugging hole 111, which not only saves the mounting space, but also ensures a full contact between the contact portion 143 and the contact section 122, thereby improving the electrical performance of the electrical connection structure 100.

Specifically, the contact portion 143 may further include a support portion fixed on the circuit board 110. During the use of the electrical connection structure 100, the contact between the contact portion 143 and the contact section 122 is achieved through the elastic deformation of the elastic portion 142, but the elastic portion 142 suffers from a metal fatigue, and when the working time is too long or being subjected to a large impact, the elastic portion 142 will lose its elasticity, so that the contact force between the contact portion 143 and the contact section 122 decreases and the contact resistance increases, which leads to an excessive temperature rise of the contact portion and causes a the damage to the electrical connection structure 100. By adding a support portion on the contact portion 143 and fixing the support portion on the circuit board 110, both ends of the metal elastic piece 140 can be fixed on the circuit board 110, which avoids the loss of elasticity of the elastic portion 142 caused by the single free end of the metal elastic piece 140, thereby ensuring an excellent contact between the contact portion 143 and the contact section 122, and improving the electrical performance of the electrical connection structure 100.

Specifically, when the contact section 122 of the plugging terminal 120 is in contact with the contact portion 143 of the metal elastic piece 140, the elastic portion 142 of the metal elastic piece 140 is elastically deformed, the resilience of the elastic portion 142 acts on the contact portion 143, and a pressure is further exerted on the contact section 122 of the plugging terminal 120, so as to realize a stable electrical connection between the plugging terminal 120 and the metal elastic piece 140 and the circuit board 110.

Further, the pressure exerted on the contact section 122 by the contact portion 143may be 0.5 N to 50 N. In order to verify the influence of the pressure exerted on the contact section 122 by the contact portion 143 on the contact resistance between the contact portion 143 and the contact section 122, the inventor selects the metal elastic piece 140, the plugging terminal 120 and the circuit board 110 with the same size and mount them in the same relative positions, but adopts different elastic forces of the elastic portion 142 to measure the contact resistance between the contact portion 143 and the contact section 122 respectively. The test results are shown in Table 2.

The elastic force of the elastic portion 142 is measured using a precision tension force gauge, after the metal elastic piece 140 is fixed and the elastic portion 142 is moved by a working displacement.

The test method of the contact resistance between the contact portion 143 and the contact section 122 is to use a micro-ohmmeter, in which one end of a measuring portion of the micro-ohmmeter is placed on the contact portion 143 and the other end thereof is placed on the contact section 122, with the same position for each measurement, and then read the value of the contact resistance on the micro-ohmmeter. In this embodiment, the contact resistance greater than 1 mΩ is unqualified.

**Table 2: Influence of different pressures on the contact resistance between the contact portion 143 and the contact section 122**

| Pressure exerted on the contact section 122 by the contact portion 143 (N) | | | | | | | | | | | |
|---|---|---|---|---|---|---|---|---|---|---|---|
| 0.1 | 0.3 | 0.5 | 1 | 3 | 5 | 10 | 20 | 30 | 40 | 50 | 60 |

| Contact resistance between the contact portion 143 and the contact section 122 (mΩ) | | | | | | | | | | | |
|---|---|---|---|---|---|---|---|---|---|---|---|
| 1.21 | 1.03 | 0.98 | 0.90 | 0.88 | 0.84 | 0.81 | 0.77 | 0.72 | 0.68 | 0.63 | Unplu ggable |

As can be seen from Table 2, when the pressure exerted on the contact section 122 by the contact portion 143 is less than 0.5 N, since the pressure is small, the contact area between the contact portion 143 and the contact section 122 is small and the contact resistance also increases, which does not meet the standard requirements. However, when the pressure exerted on the contact section 122 by the contact portion 143 is greater than 50 N, there is almost no deformation since the elastic force of the elastic portion 142 is too large, while the contact section 122 cannot be inserted into the contact portion 143 since the inscribed circle diameter of the contact portion 143 is smaller than the outer diameter of the contact section 122, so that the function of the electrical connection structure 100 cannot be realized. Therefore, the inventor sets the pressure exerted on the contact section 122 by the contact portion 143 to be 0.5 N to 50 N.

**In** some examples the metal elastic piece 140 is made of copper or copper alloy, and a conductor material made of copper is exemplified owing to good electrical conductivity, ductility and elasticity.

Further, the material of the metal elastic piece 140 includes tellurium. The metal elastic piece 140 is made of tellurium copper alloy, which provides the terminal with good electrical conductivity and machinability, thereby ensuring the electrical performance and improving the machinability. Meanwhile, the tellurium copper alloy has excellent elasticity. Exemplarily, the content of tellurium in the material of the metal elastic piece 140 is 0.1% to 5%.

The inventor selects ten metal elastic pieces 140 with the same shape for testing, each made of tellurium copper alloy, in which the contents of tellurium account for 0.05%, 0.1%, 0.2%, 1%, 1.2%, 1.8%, 3%, 5%, 6% and 7%, respectively. The elasticity and the resistance of the metal elastic piece 140 are tested, and the test results are shown in Table 3.

The elastic force of the elastic portion 142 is measured using a precision tension force gauge, after the metal elastic piece 140 is fixed and the elastic portion 142 is moved by a working displacement. **In** this embodiment, the elastic force less than 20 N is unqualified.

The test method of the resistance of the metal elastic piece 140 is to use a micro-ohmmeter, a measuring portion of which is placed on both ends of the metal elastic piece 140, with the same position for each measurement, and then read the value of the resistance on the micro-ohmmeter. In this embodiment, the resistance greater than 1 mΩ is unqualified.

**Table 3: Influence of different contents of tellurium on the elastic force and the resistance of the metal elastic piece 140**

| Content of tellurium in the metal elastic piece 140 | | | | | | | | | |
|---|---|---|---|---|---|---|---|---|---|
| 0.05% | 0.1% | 0.2% | 1% | 1.2% | 1.8% | 3% | 5% | 6% | 7% |

| Elastic force of the elastic portion 142 (N) | | | | | | | | | |
|---|---|---|---|---|---|---|---|---|---|
| 18 | 21 | 28 | 32 | 36 | 40 | 45 | 49 | 54 | 59 |

| Resistance of the metal elastic piece 140 (mΩ) | | | | | | | | | |
|---|---|---|---|---|---|---|---|---|---|
| 0.62 | 0.67 | 0.73 | 0.78 | 0.84 | 0.89 | 0.94 | 0.97 | 1.03 | 1.16 |

As can be seen from Table 3, when the content of tellurium in the material of the metal elastic piece 140 is less than 0.1%, the elastic force of the elastic portion 142 does not meet the required value since the material is almost pure copper and relatively soft. However, when the content of tellurium in the material of the metal elastic piece 140 is greater than 5%, the resistance of the metal elastic piece 140 does not meet the requirement since the electrical conductivity of the tellurium copper alloy is lower than that of pure copper. Therefore, the content of tellurium in the material of the metal elastic piece 140 is 0.1% to 5%.

Further, the material of the metal elastic piece 140 includes beryllium. The material of the metal elastic piece 140 is beryllium copper alloy, which makes the terminal have high hardness, elastic limit, fatigue limit and wear resistance, as well as good corrosion resistance, thermal conductivity and electrical conductivity, and no spark will occur under the striking. Exemplarily, the content of beryllium in the material of the metal elastic piece 140 is 0.05% to 5%. The content of beryllium in the material of the metal elastic piece 140 is specified by the inventor through many tests.

When the content of beryllium in the material of the metal elastic piece 140 is less than 0.05%, sparks will easily occur under the striking since the material is almost pure copper. However, when the content of beryllium in the material of the metal elastic piece 140 is greater than 5%, the resistance of the metal elastic piece 140 does not meet the requirement since the electrical conductivity of the beryllium copper alloy is lower than that of pure copper. Therefore, the content of beryllium in the material of the metal elastic piece 140 is 0.05% to 5%. More exemplarily, the content of beryllium in the material of the metal elastic piece 140 is 0.1% to 3.5%.

In order to verify the effect of the content of beryllium in the material of the metal elastic piece 140 on the resistance and the number of times of sparking of the metal elastic piece 140, the inventor selects ten metal elastic pieces 140 with the same shape for testing, each made of beryllium copper alloy, in which the contents of beryllium account for 0.05%, 0.1%, 0.2%, 1%, 1.2%, 1.8%, 3%, 5%, 6% and 7%, respectively. The resistance and the number of times of sparking of the metal elastic piece 140 are tested, and the test results are shown in Table 4.

The test method of the resistance of the metal elastic piece 140 is to use a micro-ohmmeter, a measuring portion of which is placed on both ends of the metal elastic piece 140, with the same position for each measurement, and then read the value of the resistance on the micro-ohmmeter. In this embodiment, the resistance greater than 1 mΩ is unqualified.

The number of times of sparking of the metal elastic piece 140 is observed during 1000 times of striking, which is made between the charged plugging terminal 120 and the metal elastic piece 140 to simulate the working states thereof. The number of times of sparking greater than 3 is unqualified.

**Table 4: Influence of different contents of beryllium on the resistance and the number of times of sparking of the metal elastic piece 140**

| Content of beryllium in the metal elastic piece 140 | | | | | | | | | | |
|---|---|---|---|---|---|---|---|---|---|---|
| 0.03% | 0.05% | 0.1% | 0.2% | 1% | 1.2% | 1.8% | 3% | 3.5% | 5% | 6% |

| Number of times of sparking of the metal elastic piece 140 | | | | | | | | | | |
|---|---|---|---|---|---|---|---|---|---|---|
| 6 | 3 | 1 | 1 | 0 | 0 | 0 | 0 | 0 | 0 | 0 |

| Resistance of the metal elastic piece 140 (mΩ) | | | | | | | | | | |
|---|---|---|---|---|---|---|---|---|---|---|
| 0.53 | 0.61 | 0.68 | 0.74 | 0.79 | 0.85 | 0.87 | 0.92 | 0.94 | 0.99 | 1.07 |

As can be seen from Table 4, when the content of beryllium in the material of the metal elastic piece 140 is less than 0.05%, the number of times of sparking exceeds three when the plugging terminal strikes the elastic metal sheet 4, since the material is almost pure copper. However, when the content of beryllium in the material of the metal elastic piece 140 is greater than 5%, the resistance of the metal elastic piece 140 does not meet the requirement since the electrical conductivity of the beryllium copper alloy is lower than that of pure copper. Therefore, the content of beryllium in the material of the metal elastic piece 140 is 0.05% to 5%. Exemplarily, since the resistance and the number of times of sparking of the metal elastic piece 140 are in a better range when the content of beryllium in the material of the metal elastic piece 140 is 0.1% to 3.5%, the inventor sets the content of beryllium in the material of the metal elastic piece 140 to be exemplarily 0.1% to 3.5%.

In some examples, the contact section 122 of the contact terminal and the contact portion 143 of the metal elastic piece 140 are provided with plating layers. Exemplarily, the material of the plating layer on the contact section 122 is different from that of the plating layer on the contact portion 143.

The effect of the plating layer is to improve the corrosion resistance, the electrical conductivity, the number of times of plugging and so as to extend the service lives of the plugging terminal 120 and the metal elastic piece 140.

The plating layer may be prepared by electroplating, electroless plating, magnetron sputtering, vacuum plating, etc. The thicknesses of the plating layers of the metal elastic piece 140 and the plugging terminal 120 may be the same, or may be different as required.

The electroplating is a process of plating a thin layer of other metal or alloy on a surface of some metal by using a principle of electrolysis.

The electroless plating is a deposition process in which a metal is produced through a controllable oxidation-reduction reaction under a metal catalytic action.

The magnetron sputtering is to use an interaction between a magnetic field and an electric field to make electrons move spirally near a target surface, thereby increasing the probability that electrons bombard argon to generate ions. The generated ions bombard the target surface under the action of the electric field so as to sputter a target material.

The vacuum plating is to deposit various metal and non-metal films on the surface of a molded piece by means of distillation or sputtering under vacuum conditions.

The material of the plating layer may include one or more of gold, silver, nickel, tin, zinc, tin-lead alloy, silver-antimony alloy, palladium, palladium-nickel alloy, graphite silver, graphene silver and silver-gold-zirconium alloy. As an active metal, copper will react with oxygen and water during use, so one or more inactive metals are needed as the plating layer to prolong the service lives of the metal elastic piece 140 and the plugging terminal 120. In addition, for a metal contact point subjected to plugging and unplugging frequently, a metal with good wear resistance is also needed as the plating layer, thereby greatly prolonging the service life of the contact point. Moreover, the contact point requires good electrical conductivity, and the above metals have better electrical conductivity and stability than copper or copper alloy, so that the metal elastic piece 140 and the plugging terminal 120 can obtain a better electrical performances and longer service lives.

In order to verify the influence of different materials of the plating layer on the overall performance of the metal elastic piece 140 and the plugging terminal 120, the inventor adopts the same specification and material, and utilizes samples of the metal elastic piece 140 and the plugging terminal 120 having plating layers of different materials to carry out a series of tests on the corrosion resistance time, and the test results are shown in Table 5 below.

The test on the corrosion resistance time in Table 5 is to put the metal elastic piece 140 and the plugging terminal 120 into a salt spray test chamber, spray salt fog for each position on both the metal elastic piece 140 and the plugging terminal 120, take out and clean the metal elastic piece 140 and the plugging terminal 120 every 20 hours to observe the surface corrosions thereof, which is a cycle, stop the test until a corrosion area of the surface of each of the metal elastic piece 140 and the plugging terminal 120 is more than 10% of a total area thereof, and then record the number of cycles at that time. In this embodiment, the number of cycles less than 80 is unqualified.

**Table 5: Influence of different materials of the plating layer on the corrosion resistance of the metal elastic piece 140 and the plugging terminal 120**

| Different materials of the plating layer | | | | | | | | | | | |
|---|---|---|---|---|---|---|---|---|---|---|---|
| Gold | Silver | Silver-antimony alloy | Graphite silver | Graphene silver | Silver-gold-zirconiu m alloy | Tin | Nickel | Palladiu m | Palladiu m-nickel alloy | Tin-lead alloy | Zinc |
| Number of cycles of corrosion resistance tests | | | | | | | | | | | |
| 131 | 126 | 126 | 132 | 128 | 133 | 87 | 89 | 110 | 117 | 111 | 85 |

As can be seen from Table 5, when the material of the plating layer is selected from gold, silver, silver-antimony alloy, palladium, palladium-nickel alloy, graphite silver, graphene silver or silver-gold-zirconium alloy, the test result largely exceeds the standard value and the performance is stable. When the material of the plating layer is selected from nickel, tin, tin-lead alloy or zinc, the test result can also meet the requirement. Therefore, the inventor selects that the material of the plating layer includes one or combinations of gold, silver, nickel, tin, tin-lead alloy, zinc, silver-antimony alloy, palladium, palladium-nickel alloy, graphite silver, graphene silver and silver-gold-zirconium alloy.

Further, the plating layer may include a bottom layer and a surface layer. In some embodiments, the plating layer is formed using a multi-layer plating method. After the plugging terminal 120 and the metal elastic piece 140 are processed, there are still many cracks and holes under a surface micro-interface. These cracks and holes are the main reasons for the wearing and corrosion of the metal elastic piece 140 and the plugging terminal 120 during use. Therefore, it is necessary to firstly plate a bottom layer on the surface of each of the metal elastic piece 140 and the plugging terminal 120 to fill the cracks and holes on the surface, so that the surfaces are smooth and free of the defects mentioned above, and then plate a surface layer, so that the binding is firmer and smoother and the surface of the plating layer has no cracks or holes. As a result, the wear resistance, the corrosion resistance and the electrical performance of the metal elastic piece 140 and the plugging terminal 120 become better, and the service lives of the metal elastic piece 140 and the plugging terminal 120 are greatly prolonged.

The material of the bottom layer may include one or more of gold, silver, nickel, tin, tin-lead alloy and zinc; and the material of the surface layer may include one or more of gold, silver, silver-antimony alloy, palladium, palladium-nickel alloy, graphite silver, graphene silver and silver-gold-zirconium alloy. In which, the bottom layer is made of an existing material, and the surface layer is also made of an existing material.

In a specific embodiment, a thickness of the bottom layer is 0.01 µm to 15 µm. Exemplarily, the thickness of the bottom layer is 0.1 µm to 9 µm.

In a specific embodiment, a thickness of the surface layer is 0.3 µm to 55 µm. Exemplarily, the thickness of the surface layer is 0.5 µm to 35 µm.

In order to verify the influence of the change of the thickness of the bottom layer of the plating layer on the overall performance of the metal elastic piece 140 and the plugging terminal 120, the inventor adopts the same specification and material, and utilizes samples of the metal elastic piece 140 and the plugging terminal 120 having the nickel-plated bottom layers of different thicknesses and the silver-plated surface layers of the same thickness, to carry out a series of tests on the temperature rise and the corrosion resistance time. The test results are shown in Table 6 below.

The test on the temperature rise in Table 6 is to supply the same power to the metal elastic piece 140 and the plugging terminal 120 which have been contacted, detect the temperatures of the metal elastic piece 140 and the plugging terminal 120 at the same position before the power supply and after the temperature is stable in a closed environment, and take a difference therebetween to obtain an absolute value. In this embodiment, the temperature rise greater than 50K is unqualified.

The test on the corrosion resistance time in Table 6 is to put the metal elastic piece 140 and the plugging terminal 120 into a salt spray test chamber, spray salt fog for each position on both the metal elastic piece 140 and the plugging terminal 120, take out and clean the metal elastic piece 140 and the plugging terminal 120 every 20 hours to observe the surface corrosions thereof, which is a cycle, stop the test until a corrosion area of the surface of each of the metal elastic piece 140 and the plugging terminal 120 is more than 10% of a total area thereof, and then record the number of cycles at that time. In this embodiment, the number of cycles less than 80 is unqualified.

**Table 6: Influence of different thicknesses of the bottom layer on the temperature rise and the corrosion resistance of the metal elastic piece 140 and the plugging terminal 120**

| Different nickel-plated thicknesses of the bottom layer (µm) | | | | | | | | | | | | | | | |
|---|---|---|---|---|---|---|---|---|---|---|---|---|---|---|---|
| 0.001 | 0.005 | 0.01 | 0.05 | 0.1 | 0.5 | 1 | 3 | 5 | 6 | 9 | 11 | 13 | 15 | 17 | 19 |

| Temperature rise of the plugged parts (k) | | | | | | | | | | | | | | | |
|---|---|---|---|---|---|---|---|---|---|---|---|---|---|---|---|
| 10.7 | 12.3 | 14.9 | 16.5 | 18.2 | 21.9 | 24.5 | 26.7 | 28.5 | 31.3 | 35.9 | 40.5 | 43.6 | 47.8 | 58.1 | 67.4 |

| Number of cycles of corrosion resistance tests | | | | | | | | | | | | | | | |
|---|---|---|---|---|---|---|---|---|---|---|---|---|---|---|---|
| 67 | 78 | 82 | 93 | 106 | 109 | 113 | 117 | 121 | 124 | 128 | 129 | 131 | 130 | 129 | 127 |

As can be seen from Table 6, although the temperature rise of the metal elastic piece 140 and the plugging terminal 120 is qualified when the thickness of the nickel-plated bottom layer is less than 0.01µm, the number of cycles of corrosion resistance tests of the metal elastic piece 140 and the plugging terminal 120 is less than 80 since the bottom layer is thin, and the performance requirements of the metal elastic piece 140 and the plugging terminal 120 cannot be met, which greatly affects the overall performance and the service life of the electrical connection structure 100, and causes the product life to be reduced sharply or even failure burning accidents in severe cases. When the thickness of the nickel-plated bottom layer is greater than 15 µm, the heat generated by the metal elastic piece 140 and the plugging terminal 120 cannot be radiated since the bottom layer is thick, which makes the temperature rise of the metal elastic piece 140 and the plugging terminal 120 unqualified, and the plating layer with the thick bottom layer is easy to fall off the surface of each of the metal elastic piece 140 and the plugging terminal 120, resulting in a decrease in the number of cycles of corrosion resistance tests. Thus, the inventor selects the thickness of the bottom layer to be 0.01 µm to 15 µm. Exemplarily, the comprehensive effect of the temperature rise and the corrosion resistance of the metal elastic piece 140 and the plugging terminal 120 is better when the thickness of the bottom layer is 0.1 µm to 9 µm. Therefore, in order to further improve the safety, reliability and practicability of the product itself, it is optimal that the thickness of the bottom layer is 0.1 µm to 9 µm.

In order to verify the influence of the change of the thickness of the surface layer of the plating layer on the overall performance of the metal elastic piece 140 and the plugging terminal 120, the inventor adopts the same specification and material, and uses samples of the metal elastic piece 140 and the plugging terminal 120 having the nickel-plated bottom layers of the same thickness and the silver-plated surface layers of different thicknesses, to carry out a series of tests on the temperature rise and the corrosion resistance time. The test results are shown in Table 7 below.

**Table 7: Influence of different thicknesses of the surface layer on the temperature rise and the corrosion resistance of the metal elastic piece 140 and the plugging terminal 120**

| Different silver-plated thicknesses of surface layer (µm) | | | | | | | | | | | | | | | | | |
|---|---|---|---|---|---|---|---|---|---|---|---|---|---|---|---|---|---|
| 0.1 | 0.3 | 0.5 | 1 | 1.5 | 5 | 10 | 15 | 20 | 25 | 30 | 35 | 40 | 45 | 50 | 55 | 60 | 65 |

| Temperature rise of the plugged parts (k) | | | | | | | | | | | | | | | | | |
|---|---|---|---|---|---|---|---|---|---|---|---|---|---|---|---|---|---|
| 11.4 | 13.2 | 14.5 | 15.3 | 17.5 | 21.8 | 23.9 | 25.4 | 28.6 | 31.8 | 35.4 | 38.9 | 42.6 | 45.3 | 48.4 | 49.5 | 53.8 | 69.5 |

| Number of cycles of corrosion resistance tests | | | | | | | | | | | | | | | | | |
|---|---|---|---|---|---|---|---|---|---|---|---|---|---|---|---|---|---|
| 75 | 80 | 85 | 92 | 93 | 95 | 98 | 98 | 103 | 105 | 109 | 114 | 117 | 119 | 122 | 125 | 123 | 121 |

As can be seen from Table 7, although the temperature rise of the metal elastic piece 140 and the plugging terminal 120 is qualified when the thickness of the silver-plated surface layer is less than 0.3 µm, the number of cycles of corrosion resistance tests of the metal elastic piece 140 and the plugging terminal 120 is less than 80 since the surface layer is thin, and the performance requirements of the metal elastic piece 140 and the plugging terminal 120 cannot be met, which greatly affects the overall performance and the service life of the electrical connection structure 100, and causes the product life to be reduced sharply or even failure burning accidents in severer cases. When the thickness of the silver-plated surface layer is greater than 55 µm, the heat generated by the metal elastic piece 140 and the plugging terminal 120 cannot be radiated since the surface layer is thick, which makes the temperature rise of the metal elastic piece 140 and the plugging terminal 120 unqualified, and the plating layer with the thick surface layer is easy to fall off the surface of each of the metal elastic piece 140 and the plugging terminal 120, resulting in a decrease in the number of cycles of corrosion resistance tests. Moreover, since the surface layer is made of precious metal, the plating layer with a thick surface layer does not improve the performance and hence has no use value. Therefore, the inventor selects the thickness of the silver-plated surface layer to be 0.3 µm to 55 µm.

Exemplarily, the inventor finds that the comprehensive effect of the temperature rise and the corrosion resistance of the metal elastic piece 140 and the plugging terminal 120 is better when the thickness of the surface layer is 0.5 µm to 35 µm. Therefore, in order to further improve the safety, reliability and practicability of the product itself, it is optimal that the thickness of the surface layer is 0.5 µm to 35 µm.

Specifically, the number of the metal elastic pieces 140 is 3 to 24. When the number of the metal elastic pieces is 2, although the metal elastic pieces 140 which are symmetrically disposed can prevent the plugging terminal 120 from moving in a connecting direction of the two metal elastic pieces 140, it is impossible to control the plugging terminal 120 to move in a direction perpendicular to the connecting direction of the two metal elastic pieces 140, and the plugging terminal 120 may still deviate from the axis in the plugging hole 111, resulting in that the mating plugin terminal cannot be plugged with the plugging terminal 120, and the electrical connection function cannot be realized. When the number of the metal elastic pieces 140 is greater than 24, the electrical conduction performance of the metal elastic pieces 140 and the contact section 122 cannot be improved, and instead, the processing time and the product cost are increased since more metal elastic pieces 140 need to be welded.

According to the electrical connection structure 100 in this example, the plugging terminal 120 is in good contact with the metal elastic pieces 140 which are firmly connected to the circuit board 110. In addition, the metal elastic pieces 140 provide a plurality of signal detection points, thereby ensuring the stability of signal transmission. Meanwhile, the metal elastic piece 140 itself has a good performance, can be subjected to frequent plugging and unplugging with the plugging terminal 120, and achieves a long service life.

### Embodiment

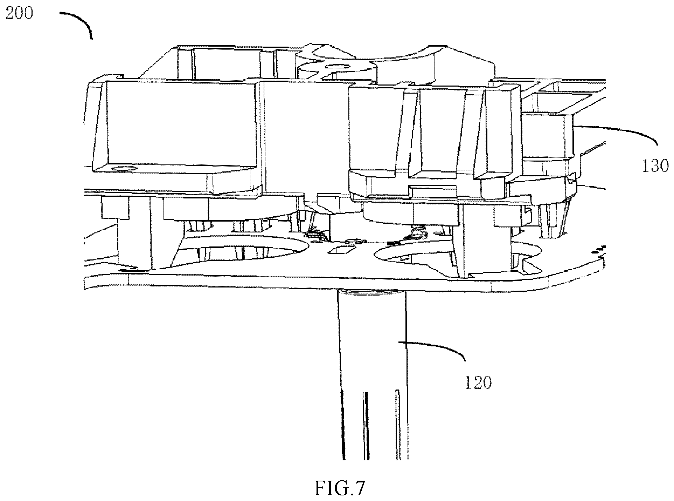

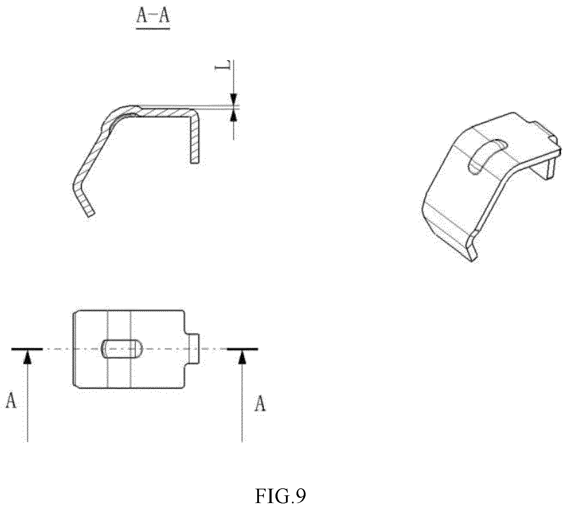

An electrical connection structure 200 according to an embodiment will be described below with reference to FIGS. 7 to 9. Except for the metal elastic piece 240 and the circuit board 210, the plugging terminal 120 and the terminal bracket have the same structures and configurations as described in the background example. Therefore, elements having substantially the same functions as those in the background example adopt the same reference signs, and are not described and/or illustrated in detail here for brevity.

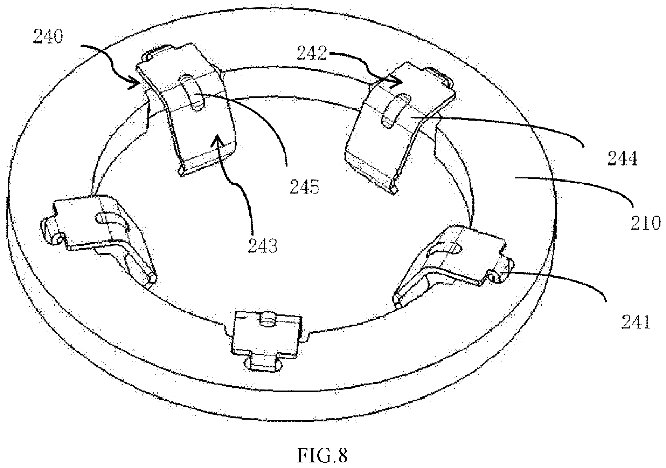

As illustrated in FIG. 8, the metal elastic piece 240 includes a fixing portion 241, an elastic portion 242 and a contact portion 243 which are disposed in sequence, in which the fixing portions 241 of the plurality of metal elastic pieces 240 are fixed into reserved holes of the circuit board 210 which are disposed along the circumferential direction of the plugging hole. Reinforcing ribs are disposed at a connection transition between the elastic portion 242 and the contact portion 243, and/or at a connection transition between the fixing portion 241 and the elastic portion 242. By disposing the reinforcing ribs 245, it is possible to enhance the strength and rigidity of the metal elastic piece 240 at the connection transition 244 between the elastic portion 242 and the contact portion 243, and/or at the connection transition between the fixing portion 241 and the elastic portion 242, so as to prevent the metal elastic piece 240 from breaking from the connection transition 244 and the service life thereof from being affected during frequent plugging and unplugging of the plugging terminal 120. Exemplarily, a ratio of a height of the reinforcing rib 245 protruding from a surface of the connection transition 244 to a thickness of the metal elastic piece 240 ranges from 0.1 to 1.

In order to verify the influence of the range of the ratio of the height of the reinforcing rib 245 to the thickness of metal elastic piece 240 on the elastic force and the service life of the metal elastic piece 240, the inventor selects ten metal elastic pieces 240 each punched into the same shape at the connection transition 244 and the reinforcing ribs 245 with different heights, to respectively test the elastic forces and the service lives of the metal elastic pieces 240, and the test results are shown in Table 8 below.

The elastic force of the elastic portion 242 is measured using a precision tension force gauge, after the metal elastic piece 240 is fixed and the elastic portion 242 is moved by a working displacement. In this embodiment, the elastic force less than 20 N is unqualified.

The test on the service life of the metal elastic piece 240 is to assemble the metal elastic piece 240 with the identical plugging terminal 120 and circuit board 110, continuously plug and unplug the plugging terminal 120, and observe the fracture of the metal elastic piece 240 every 10 times; stop the test when a fracture occurs, and then record the number of times of plugging and unplugging, which is unqualified when being less than 8000.

**Table 8: Influence of the range of the ratio of the height of the reinforcing rib to the thickness of the metal elastic piece on the elastic force and the service life of the metal elastic piece**

| Ratio of the height of the reinforcing rib to the thickness of the metal elastic piece | | | | | | | | | |
|---|---|---|---|---|---|---|---|---|---|
| 0.03 | 0.05 | 0.1 | 0.3 | 0.5 | 0.7 | 0.9 | 1 | 1.1 | 1.3 |

| Elastic force of the elastic portion (N) | | | | | | | | | |
|---|---|---|---|---|---|---|---|---|---|
| 15 | 19 | 22 | 25 | 29 | 35 | 41 | 47 | 52 | 58 |

| The number of times of plugging and unplugging | | | | | | | | | |
|---|---|---|---|---|---|---|---|---|---|
| 11570 | 11460 | 10870 | 10530 | 9730 | 9280 | 8670 | 8350 | 7860 | 7230 |

As can be seen from Table 8, when the ratio of the height of the reinforcing rib 245 protruding from the surface of the connection transition 244 to the thickness of the metal elastic piece 240 is less than 0.1, the elastic force of the elastic portion 242 does not meet the required value since the material is almost pure copper and relatively soft. However, when the ratio of the height of the reinforcing rib 245 protruding from the surface of the connection transition 244 to the thickness of the metal elastic piece 240 is greater than 1, the metal elastic piece 240 is tensioned too much in the thickness direction due to a high punching height, and the stress is concentrated, so that in multiple plugging and unplugging tests, the reinforcing rib 245 is continuously bent, and the bending times decreases as the height increases. Therefore, the inventor sets the ratio of the height of the reinforcing rib 245 protruding from the surface of the connection transition 244 to the thickness of the metal elastic piece 240 to range from 0.1 to 1.

The contact portion 243 of the metal elastic piece 240 may be provided with a bent structure. When the contact section of the plugging terminal is in contact with the contact section 243 of the metal elastic piece 240, the elastic portion 242 of the metal elastic piece 240 is elastically deformed, and the resilience of the elastic portion 242 acts on the contact section of the plugging terminal 120, so as to realize a stable electrical connection between the plugging terminal 120 and the metal elastic piece 240.

The present disclosure further provides a charging socket, which may include the electrical connection structure 100 of any of the above embodiments. According to the electrical connection structure 100 of the present disclosure, the plugging terminal 120 is in good contact with the metal elastic pieces 140 which are firmly connected to the circuit board 110, and the metal elastic pieces 140 provide a plurality of signal detection points, thereby ensuring the stability of signal transmission. Meanwhile, the metal elastic piece 140 itself has a good performance, can be subjected to frequent plugging and unplugging with the plugging terminal 120, and achieves a long service life.

### Further embodiment

The present disclosure further provides an automobile, which may include the charging socket and/or the electric connection structure of any one of the above embodiments. In the existing charging socket, the plugging terminal 120 is usually directly welded on a circuit board. When being damaged during use, the plugging terminal 120 is uneasy to be removed during maintenance, which increases the maintenance manhours and the maintenance cost. When being not welded firmly, th e plugging terminal 120 will be in poor contact with the circuit board 110, thereby affecting the stability of the electrical connection between the circuit board 110 and the plugging terminal 120, so that a current leakage may be caused in the equipment, and there is a risk of electric shock casualties. The automobile provided by the present disclosure includes the charging socket and/or the electric connection structure of any one of the above embodiments, and the circuit board 110 and the plugging terminal 120 are in contact connection using the metal elastic piece 140, so that the plugging terminal 120 can be removed from the circuit board 110 at any time, thereby saving the maintenance manhours and reducing the maintenance cost. In addition, the elastic force of the metal elastic piece 140 is stable, and the contact resistance with the plugging terminal 120 is always kept stable, so that the metal elastic piece 140 can also maintain a stable electrical connection with the plugging terminal 120 under the conditions that the automobile is in motion and the plugging terminal 120 is constantly vibrating, thereby ensuring the safety of the automobile and prolonging the service life thereof.

Unless otherwise defined, technical and scientific terms used herein have the same meanings as those commonly understood by persons skilled in the technical field of the present disclosure. The terms used herein are for the purpose of describing the specific embodiments only and are not intended to limit the present disclosure. The terms such as "component" occurring herein can indicate either a single part or a combination of a plurality of parts. The terms such as "mount" and "dispose" occurring herein can mean that one component is attached to another component directly or through middleware. A feature described in one embodiment herein can be applied to another embodiment alone or in combination with other features, unless the feature is not applicable in another embodiment or otherwise specified.

Although the present disclosure has been described through the above embodiments, it should be understood that the above embodiments are only for the purpose of illustration and description, and are not intended to limit the scope of the present disclosure.

## Claims

1. An electrical connection structure, the electrical connection structure comprising:
a circuit board (210), wherein the circuit board (210) is provided with a plugging hole (111);
a plurality of metal elastic pieces (240) and a plugging terminal (120), wherein the plugging terminal (120) comprises a contact section (122), which is in contact connection with the metal elastic pieces (240);
wherein the plurality of metal elastic pieces (240) are fixed to the circuit board (210) along a circumferential direction of the plugging hole (111), and the plugging terminal (120) is in contact connection with the plurality of metal elastic pieces (240) in a state that the plugging terminal (120) is plugged into the plugging hole (111), to form an electrical connection between the plugging terminal (120) and the circuit board (210);
wherein each metal elastic piece (240) comprises a fixing portion (241), an elastic portion (242) and a contact portion (243) which are disposed in sequence,
**characterized in that**, the fixing portions (241) are fixed into reserved holes of the circuit board (210) which are disposed along the circumferential direction of the plugging hole (111), and reinforcing ribs (245) are disposed at a connecting transition (244) between the elastic portion (242) and the contact portion (243) and/or a connecting transition (244) between the fixing portion (241) and the elastic portion (242).

2. The electrical connection structure according to claim 1, further comprising a terminal bracket (130) fixed on the circuit board (210).

3. The electrical connection structure according to claim 2, wherein the plugging terminal (120) further comprises a fixing section (123) fixed on the terminal bracket (130).

4. The electrical connection structure according to claim 1, wherein an outer diameter of the contact section (122) is smaller than a diameter of the plugging hole (111), and the contact section (122) is located in the plugging hole (111).

5. The electrical connection structure according to claim 1, wherein the plurality of metal elastic pieces (240) are annularly arranged along the circumferential direction of the plugging hole (111).

6. The electrical connection structure according to claim 5, wherein the plurality of metal elastic pieces (240) are annularly arranged uniformly.

7. The electrical connection structure according to claim 1, wherein a ratio of a height of the reinforcing rib (245) protruding from a surface of the connecting transition (244) to a thickness of the metal elastic piece (240) ranges from 0.1 to 1.

8. The electrical connection structure according to claim 1, wherein
the contact portion (243) is provided with an arc structure or a bent structure;
a bending angle of the bent structure is 90° to 160°; or
the plurality of contact portions (243) are arranged in a circle, and an inscribed circle diameter of the
plurality of the contact portions (243) is smaller than the outer diameter of the contact section (122); or
when the plugging terminal (120) is in contact connection with the plurality of contact portions (243), the elastic portion (242) is elastically deformed, and the contact portions (243) exert a pressure on the plugging terminal (120);
wherein the pressure is 0.5 N to 50 N; or
the contact section (122) and the contact portion (243) are provided with plating layers;
wherein
a material of the plating layer on the contact section (122) is different from that of the plating layer on the contact portion (243); or
the material of the plating layer includes one or more of gold, silver, nickel, tin, zinc, tin-lead alloy, silver-antimony alloy, palladium, palladium-nickel alloy, graphite silver, graphene silver and silver-gold-zirconium alloy; or
the plating layer comprises a bottom layer and a surface layer;
wherein
a material of the bottom layer includes one or more of gold, silver, nickel, tin, tin-lead alloy and zinc; and a material of the surface layer includes one or more of gold, silver, nickel, tin, tin-lead alloy, silver-antimony alloy, palladium, palladium-nickel alloy, graphite silver, graphene silver and silver-gold-zirconium alloy; or
a thickness of the bottom layer is 0.01 µm to 15 µm; or
a thickness of the bottom layer is 0.1 µm-9 µm; or
a thickness of the surface layer is 0.3 µm to 55 µm; or
a thickness of the surface layer is 0.5 µm to 35 µm.

9. The electrical connection structure according to claim 1, wherein a material of the metal elastic piece (240) is copper or copper alloy;
the material of the metal elastic piece (240) includes tellurium;
a content of tellurium in the material of the metal elastic piece (240) is 0.1% to 5%; or
the material of the metal elastic piece (240) includes beryllium;
wherein
a content of beryllium in the material of the metal elastic piece (240) is 0.05% to 5%; and preferably
a content of beryllium in the material of the metal elastic piece (240) is 0.1% to 3.5%.

10. A charging socket, comprising the electrical connection structure according to any one of claims 1 to 9.

11. An automobile, comprising the charging socket according to claim 10 or the electric connection structure according to any one of claims 1 to 9.

## Patentansprüche

1. Elektrische Verbindungsstruktur, wobei die elektrische Verbindungsstruktur aufweist:
eine Leiterplatte (210), wobei die Leiterplatte (210) mit einer Stecköffnung (111) versehen ist;
eine Vielzahl von elastischen Metallstücken (240) und einen Steckanschluss (120), wobei der Steckanschluss (120) einen Kontaktabschnitt (122) aufweist, der in Kontaktverbindung mit den elastischen Metallstücken (240) steht;
wobei die Vielzahl von elastischen Metallstücken (240) entlang einer Umfangsrichtung der Stecköffnung (111) an der Leiterplatte (210) befestigt sind, und der Steckanschluss (120) in einem Zustand, in dem der Steckanschluss (120) in die Stecköffnung (111) eingesteckt ist, in Kontaktverbindung mit der Vielzahl von elastischen Metallstücken (240) steht, um eine elektrische Verbindung zwischen dem Steckanschluss (120) und der Leiterplatte (210) herzustellen;
wobei jedes elastische Metallstück (240) einen Befestigungsabschnitt (241), einen elastischen Abschnitt (242) und einen Kontaktabschnitt (243) aufweist, die nacheinander angeordnet sind,
**dadurch gekennzeichnet, dass** die Befestigungsabschnitte (241) in vorgesehene Löcher der Leiterplatte (210) befestigt sind, die entlang der Umfangsrichtung der Stecköffnung (111) angeordnet sind, und Verstärkungsrippen (245) an einem Verbindungsübergang (244) zwischen dem elastischen Abschnitt (242) und dem Kontaktabschnitt (243) und/oder an einem Verbindungsübergang (244) zwischen dem Befestigungsabschnitt (241) und dem elastischen Abschnitt (242) angeordnet sind.

2. Elektrische Verbindungsstruktur nach Anspruch 1, die ferner eine an der Leiterplatte (210) befestigte Anschlusshalterung (130) aufweist.

3. Elektrische Verbindungsstruktur nach Anspruch 2, bei der der Steckanschluss (120) ferner einen Befestigungsabschnitt (123) aufweist, der an der Anschlusshalterung (130) befestigt ist.

4. Elektrische Verbindungsstruktur nach Anspruch 1, bei der ein Außendurchmesser des Kontaktabschnitts (122) kleiner ist als ein Durchmesser der Stecköffnung (111) und der Kontaktabschnitt (122) in der Stecköffnung (111) angeordnet ist.

5. Elektrische Verbindungsstruktur nach Anspruch 1, bei der die Vielzahl von elastischen Metallstücken (240) ringförmig entlang der Umfangsrichtung der Stecköffnung (111) angeordnet sind.

6. Elektrische Verbindungsstruktur nach Anspruch 5, bei der die Vielzahl von elastischen Metallstücken (240) gleichmäßig ringförmig angeordnet sind.

7. Elektrische Verbindungsstruktur nach Anspruch 1, bei der das Verhältnis der Höhe der Verstärkungsrippe (245), die aus einer Oberfläche des Verbindungsübergangs (244) herausragt, zur Dicke des elastischen Metallstücks (240) im Bereich von 0,1 bis 1 liegt.

8. Elektrische Verbindungsstruktur nach Anspruch 1, bei der
der Kontaktabschnitt (243) mit einer Bogenstruktur oder einer gebogenen Struktur versehen ist;
ein Biegewinkel der gebogenen Struktur 90° bis 160° beträgt; oder
die Vielzahl von Kontaktabschnitten (243) kreisförmig angeordnet sind und ein Innenkreisdurchmesser der Vielzahl von Kontaktabschnitten (243) kleiner ist als der Außendurchmesser des Kontaktabschnitts (122); oder
wenn der Steckanschluss (120) in Kontaktverbindung mit der Vielzahl von Kontaktabschnitten (243) steht, der elastische Abschnitt (242) elastisch verformt wird und die Kontaktabschnitte (243) einen Druck auf den Steckanschluss (120) ausüben;
wobei der Druck 0,5 N bis 50 N beträgt; oder
der Kontaktabschnitt (122) und der Kontaktabschnitt (243) mit Beschichtungsschichten versehen sind;
wobei sich das Material der Beschichtungsschicht auf dem Kontaktabschnitt (122) von dem der Beschichtungsschicht auf dem Kontaktabschnitt (243) unterscheidet; oder
das Material der Beschichtungsschicht eines oder mehrere der folgenden Elemente umfasst: Gold, Silber, Nickel, Zinn, Zink, eine Zinn-Blei-Legierung, eine Silber-Antimon-Legierung, Palladium, eine Palladium-Nickel-Legierung, Graphit-Silber, Graphen-Silber und eine Silber-Gold-Zirkonium-Legierung; oder
die Beschichtungsschicht eine Unterschicht und eine Oberflächenschicht aufweist;
wobei ein Material der Unterschicht eines oder mehrere der folgenden Elemente umfasst: Gold, Silber, Nickel, Zinn, eine Zinn-Blei-Legierung und Zink; und ein Material der Oberflächenschicht eines oder mehrere der folgenden Elemente umfasst: Gold, Silber, Nickel, Zinn, eine Zinn-Blei-Legierung, eine Silber-Antimon-Legierung, Palladium, eine Palladium-Nickel-Legierung, Graphitsilber, Graphen-Silber und eine Silber-Gold-Zirkonium-Legierung; oder
die Dicke der Unterschicht 0,01 µm bis 15 µm beträgt; oder
die Dicke der Unterschicht 0,1 µm bis 9 µm beträgt; oder
die Dicke der Oberflächenschicht 0,3 µm bis 55 µm beträgt; oder
die Dicke der Oberflächenschicht beträgt 0,5 µm bis 35 µm.

9. Elektrische Verbindungsstruktur nach Anspruch 1, bei der das Material des elastischen Metallstücks (240) Kupfer oder eine Kupferlegierung ist;
das Material des elastischen Metallstücks (240) Tellur enthält;
der Tellurgehalt im Material des elastischen Metallstücks (240) 0,1 % bis 5 % beträgt; oder
das Material des elastischen Metallstücks (240) Beryllium enthält;
wobei der Berylliumgehalt im Material des elastischen Metallstücks (240) 0,05 % bis 5 % beträgt;
und vorzugsweise der Berylliumgehalt im Material des elastischen Metallstücks (240) 0,1 % bis 3,5 % beträgt.

10. Ladedose, die die elektrische Verbindungsstruktur gemäß einem der Ansprüche 1 bis 9 aufweist.

11. Kraftfahrzeug, das die Ladedose gemäß Anspruch 10 oder die elektrische Verbindungsstruktur gemäß einem der Ansprüche 1 bis 9 aufweist.

## Revendications

1. Structure de connexion électrique, ladite structure de connexion électrique comprenant:
une carte de circuit imprimé (210), ladite carte de circuit imprimé (210) étant pourvue d'une ouverture d'insertion (111);
une pluralité de pièces métalliques élastiques (240) et une borne d'insertion (120), la borne d'insertion (120) comportant une partie de contact (122) qui est en contact avec les pièces métalliques élastiques (240);
la pluralité de pièces métalliques élastiques (240) étant fixées à la carte de circuit imprimé (210) le long d'une direction circonférentielle de l'ouverture d'insertion (111), et la borne d'insertion (120), dans un état où la borne d'insertion (120) est inséré dans l'ouverture d'insertion (111), est en contact avec la pluralité de pièces métalliques élastiques (240) afin d'établir une connexion électrique entre la borne d'insertion (120) et la carte de circuit imprimé (210);
chaque pièce métallique élastique (240) comportant une partie de fixation (241), une partie élastique (242) et une partie de contact (243) disposées successivement,
**caractérisé en ce que** les parties de fixation (241) sont fixées dans des trous prévus dans la carte de circuit imprimé (210), qui sont disposés le long de la direction circonférentielle de l'ouverture d'insertion (111), et des nervures de renfort (245) sont disposées au niveau d'une transition de connexion (244) entre la partie élastique (242) et la partie de contact (243) et/ou au niveau d'une transition de connexion (244) entre la partie de fixation (241) et la partie élastique (242).

2. Structure de connexion électrique selon la revendication 1, qui comprend en outre un support de connecteur (130) fixé à la carte de circuit imprimé (210).

3. Structure de connexion électrique selon la revendication 2, dans laquelle la borne d'insertion (120) comprend en outre une partie de fixation (123) fixée au support de connecteur (130).

4. Structure de connexion électrique selon la revendication 1, dans laquelle un diamètre extérieur de la partie de contact (122) est inférieur à un diamètre de l'ouverture d'insertion (111) et la partie de contact (122) est disposée dans l'ouverture d'insertion (111).

5. Structure de connexion électrique selon la revendication 1, dans laquelle la pluralité de pièces métalliques élastiques (240) sont disposées en anneau le long de la direction circonférentielle de l'ouverture d'insertion (111).

6. Structure de connexion électrique selon la revendication 5, dans laquelle la pluralité de pièces métalliques élastiques (240) sont disposées de manière uniforme en anneau.

7. Structure de connexion électrique selon la revendication 1, dans laquelle le rapport entre la hauteur de la nervure de renfort (245) faisant saillie à partir d'une surface de la transition de connexion (244) et l'épaisseur de la pièce métallique élastique (240) est compris entre 0,1 et 1.

8. Structure de connexion électrique selon la revendication 1, dans laquelle
la partie de contact (243) est pourvue d'une structure en arc ou d'une structure courbée;
l'angle de courbure de la structure courbée est compris entre 90° et 160°; ou
la pluralité de parties de contact (243) sont disposées en cercle et le diamètre intérieur de la pluralité de parties de contact (243) est inférieur au diamètre extérieur de la partie de contact (122); ou
lorsque la borne d'insertion (120) est en contact avec la pluralité de parties de contact (243), la partie élastique (242) se déforme élastiquement et les parties de contact (243) exercent une pression sur la borne d'insertion (120);
la pression étant comprise entre 0,5 N et 50 N; ou
la partie de contact (122) et la partie de contact (243) sont pourvues de couches de revêtement;
le matériau de la couche de revêtement sur la partie de contact (122) étant différent de celui de la couche de revêtement sur la partie de contact (243); ou
le matériau de la couche de revêtement comprend un ou plusieurs des éléments suivants: l'or, l'argent, le nickel, l'étain, le zinc, un alliage étain-plomb, un alliage argent-antimoine, le palladium, un alliage palladium-nickel, le graphite-argent, le graphène-argent et un alliage argent-or-zirconium; ou
la couche de revêtement comprend une sous-couche et une couche de surface;
le matériau de la sous-couche comprenant un ou plusieurs des éléments suivants: l'or, l'argent, le nickel, l'étain, un alliage étain-plomb et le zinc; et un matériau de la couche de surface comprend un ou plusieurs des éléments suivants: l'or, l'argent, le nickel, l'étain, un alliage étain-plomb, un alliage argent-antimoine, le palladium, un alliage palladium-nickel, l'argent graphite, l'argent graphène et un alliage argent-or-zirconium; ou
l'épaisseur de la sous-couche est comprise entre 0,01 µm et 15 µm; ou
l'épaisseur de la sous-couche est comprise entre 0,1 µm et 9 µm; ou
l'épaisseur de la couche de surface est comprise entre 0,3 µm et 55 µm ; ou
l'épaisseur de la couche de surface est comprise entre 0,5 µm et 35 µm.

9. Structure de connexion électrique selon la revendication 1, dans laquelle le matériau de la pièce métallique élastique (240) est du cuivre ou un alliage de cuivre;
le matériau de la pièce métallique élastique (240) contient du tellure;
la teneur en tellure dans le matériau de la pièce métallique élastique (240) est comprise entre 0,1 % et 5 %; ou
le matériau de la pièce métallique élastique (240) contient du béryllium;
la teneur en béryllium dans le matériau de la pièce métallique élastique (240) étant comprise entre 0,05 % et 5 %;
et de préférence, la teneur en béryllium dans le matériau de la pièce métallique élastique (240) est comprise entre 0,1 % et 3,5 %.

10. Douille de charge comportant la structure de connexion électrique selon l'une des revendications 1 à 9.

11. Véhicule automobile comportant la douille de charge selon la revendication 10 ou la structure de connexion électrique selon l'une des revendications 1 à 9.
